# EUROPÄISCHE PATENTSCHRIFT

(11) **EP 2 454 614 B1**
(45) Veröffentlichungstag und Bekanntmachung des Hinweises auf die Patenterteilung: **07.01.2015**
(21) Anmeldenummer: 10720761.5
(22) Anmeldetag: 17.05.2010
(51) Int. Cl.: G01V 3/12

(54) **UWB-MESSGERÄT**
UWB MEASURING DEVICE
APPAREIL DE MESURE À BANDE ULTRALARGE

(30) Priorität: 14.07.2009 DE 102009027666
(43) Veröffentlichungstag der Anmeldung: 23.05.2012
(73) Patentinhaber: Robert Bosch GmbH, 70442 Stuttgart (DE)
(72) Erfinder: KRAPF, Reiner, 72770 Reutlingen (DE); BRAUN, Heiko, 70771 Leinfelden-Echterdingen (DE)
(86) Internationale Anmeldenummer: PCT/EP2010/056721
(87) Internationale Veröffentlichungsnummer: WO 2011/006696

(56) Entgegenhaltungen:
- DE-A1-102004 007 315
- DE-A1-102004 031 627
- DE-A1-102006 002 666
- US-A1- 2005 179 578
- US-A1- 2006 061 504

## Beschreibung

### Stand der Technik

Die Erfindung geht aus von einem UWB-Messgerät nach dem Oberbegriff des Anspruchs 1.

Es ist bereits ein UWB-Messgerät mit einer Signalerzeugungseinheit zur Erzeugung eines ersten UWB-Messsignals bekannt, wobei das erste UWB-Messsignal zu einer UWB-Messung vorgesehen ist.

### Offenbarung der Erfindung

Die DE 10 2004 007 315 A1 offenbart ein Radargerät, insbesondere ein handgehaltenes Nahbereichsradar, zur Ortung von In einem Medium eingeschlossenen Objekten, mit zumindest einem UWB-Radar-Sensor, der ein erstes, hochfrequentes Detektionssignal zum Eingriff in ein zu untersuchendes Medium erzeugt, so dass durch Messung und Auswertung des reflektierten Detektionssignales des mindestens einen Radarsensors, Informationen über ein in dem Medium eingeschlossenes Objekt gewonnen werden können Das **Messgerät** der DE 10 2004 007 315 A1 weist mindestens einen weiteren Sensor zur Erzeugung mindestens eines weiteren, zweiten Detektionssignals zur Gewinnung von Informationen über das in dem Medium eingeschlossene Objekt auf.

Aus der DE 10 2004 031 627 A1 ist ein Verfahren zur werkstoffdurchdringenden Ortung eines Messsignals, insbesondere ein werkstoffdurchdringendes Positionlerungsverfahren an Wänden, Decken und Böden bekannt, bei dem ein Hochfrequenzsender ein Messsignal im Gigahertz-Frequenzbereich aussendet, welches den Werkstoff zumindest einmal durchdringt und von einem Hochfrequenzempfänger zur Lokalisierung der Durchdringungsposition detektiert wird. DE 10 2004 031 627 A1 offenbart zudem auch eine Vorrichtung zur Durchführung des Verfahrens.

### Offenbarung der Erfindung

Die Erfindung geht aus von einem UWB-Messgerät, insbesondere einem handgeführten Ortungsgerät, mit zumindest einer Signalerzeugungseinheit zur Erzeugung zumindest eines ersten UWB-Messsignals, das zu einer UWB-Messung vorgesehen ist.

Es wird vorgeschlagen, dass die Signalerzeugungseinheit zur Erzeugung eines zu dem ersten UWB-Messsignal in zumindest einem Signalparameter unterschiedlichen, zwei-ten Messsignals vorgesehen ist, das zu einer Erfassung eines Abstands zu einem Untersuchungsobjekt und/oder eines Kontakts mit dem Untersuchungsobjekt vorgesehen ist. In diesem Zusammenhang soll unter "vorgesehen" insbesondere speziell ausgestattet und/oder speziell ausgelegt und/oder speziell programmiert verstanden werden. Des Weiteren soll unter einem "UWB-Messsignal" insbesondere ein Ultrabreltbandsignal verstanden werden, wobei das Ultrabreitbandsignal ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt. Die UWB-Messung ist zu einer Ortungsmessung vorgesehen, wobei das UWB-Messsignal zu einem Erfassen eines Vorhandenseins eines in dem Untersuchungsobjekt angeordneten Gegenstands vorgesehen ist, und/oder zu einer Feuchtemessung, insbesondere eines Feuchtegehalts des Untersuchungsobjekts, und/oder zu weiteren, dem Fachmann als sinnvoll erscheinenden UWB-Messungen. Ein Betrieb der UWB-Messung mit dem ersten UWB-Messsignal benötigt eine Zulassung, nach deren Richtlinien, insbesondere aufgrund einer Sicherheit und/oder eines störungsfreien Betriebs weiterer Funkdienste, der Betrieb nur bei einem Kontakt des UWB-Messgeräts mit dem Untersuchungsobjekt, wie insbesondere eine Wandoberfläche, erfolgen darf. Vorzugsweise kann hierzu ein Betrieb mit dem zweiten Messsignal zulassungsfrei erfolgen, so dass insbesondere ein Messbetrieb mit dem zweiten Messsignal bei einem Abstand des Ortungsgeräts zu dem Untersuchungsobjekt gestartet werden kann. Ferner soll unter einem "Signalparameter" insbesondere eine Leistung des ausgesandten Signals und/oder eine Frequenz und/oder eine Pulsfolge des ausgesandten Signals und/oder weitere, dem Fachmann als sinnvoll erscheinende Parameter verstanden werden. Unter einem "Kontakt mit dem Untersuchungsobjekt" soll hierbei insbesondere ein direkter Kontakt des UWB-Messgeräts, insbesondere eines Fahrwerks zum Verfahren des UWB-Messgeräts auf einer Oberfläche des Untersuchungsobjekts und/oder eine Gleitfläche zum Gleiten des UWB-Messgeräts auf der Oberfläche des Untersuchungsobjekts, verstanden werden. Unter einem "Abstand zu dem Untersuchungsobjekt" soll insbesondere ein kürzester Abstand zwischen dem UWB-Messgerät, insbesondere einer Oberfläche, die zu einem Aussenden des ersten UWB-Messsignals und/oder des zweiten Messsignals vorgesehen ist, und dem Untersuchungsobjekt verstanden werden. Vorzugsweise erfolgt hierbei eine Messung des Abstands zu dem Untersuchungsobjekt mittels einer Messung einer Phasendifferenz zwischen einer Phase eines Referenzsignals, beispielsweise des von dem UWB-Messgerät ausgesandten zweiten Messsignals, und einer Phase des von einer Oberfläche des Untersuchungsobjekts reflektierten zweiten Messsignals. Grundsätzlich können hier auch weitere, dem Fachmann als sinnvoll erscheinende Signalparameter des zweiten Messsignals zur Bestimmung und/oder Messung des Abstands des UWB-Messgeräts zu dem Untersuchungsobjekt herangezogen werden, wie beispielsweise eine Messung einer Amplitude des zweiten Messsignals. Durch die erfindungsgemäße Ausgestaltung des UWB-Messgeräts kann vorteilhaft eine erhöhte Sicherheit des UWB-Messgeräts erreicht werden, indem der Betrieb mit einer UWB-Messung auf eine Verweildauer eines Kontakts des UWB-Messgeräts mit dem Untersuchungsobjekt beschränkt werden kann. Zudem kann eine hohe Bedienerfreundlichkeit erreicht werden, indem beispielsweise bei einem Wandkontakt eine UWB-Messung selbsttätig erfolgt und so beispielsweise Fehlbedienungen durch den Bediener vorteilhaft verhindert werden können.

Das UWB-Messgerät kann grundsätzlich von allen, dem Fachmann als sinnvoll erscheinenden Messgeräten gebildet sein. Aufgrund der vorteilhaften Ausgestaltung zur Erfassung eines Abstands und/oder eines Kontakts mit dem Untersuchungsobjekt ist das UWB-Messgerät besonders vorteilhaft als Ortungsgerät und/oder Feuchtemessgerät ausgebildet.

Besonders vorteilhaft ist das zweite Messsignal zumindest teilweise von einem UWB-Messsignal gebildet. Vorteilhafterweise wird hierbei das zweite Messsignal in einem speziellen Frequenzbereich verwendet, insbesondere ausgesandt und/oder empfangen, wie sie beispielsweise bei UWB-Kommunikationsgeräten üblich sind, wobei eine Frequenz des zweiten UWB-Messsignals vorzugsweise in einem Frequenzbereich zwischen 6 GHz und 8,5 GHz angeordnet ist. Besonders vorteilhaft kann in diesem Frequenzbereich ein Messbetrieb mit dem zweiten UWB-Messsignal beschränkungsfrei, insbesondere zulassungsfrei, erfolgen, so dass ein bestehender Kontakt zwischen dem UWB-Messgerät und einer Oberfläche des Untersuchungsobjekts keine Voraussetzung für den Messbetrieb ist. Es kann hierbei vorteilhaft eine gemeinsame Signalquelle für das erste UWB-Messsignal und das zweite UWB-Messsignal verwendet werden, so dass ein besonders kompaktes und insbesondere kostengünstiges UWB-Messgerät bereitgestellt werden kann.

Es wird zudem vorgeschlagen, dass das zweite Messsignal zumindest teilweise von einem schmalbandigen Messsignal gebildet ist. In diesem Zusammenhang soll unter einem "schmalbandigen Messsignal" insbesondere ein Signal verstanden werden, das zur Übertragung von Informationen und/oder Diensten in einem begrenzten Frequenzband vorgesehen ist. Vorzugsweise ist das schmalbandige Messsignal von einem ISM-Messsignal gebildet, wobei unter einem "ISM-Signal" insbesondere ein Signal verstanden werden soll, das vorzugsweise in einem Bereich zumindest eines ISM-Bands ausgesandt wird, wobei unter einem "ISM-Band" insbesondere Frequenzbereiche bezeichnet werden sollen, die durch Hochfrequenz-Geräte, insbesondere in häuslichen und/oder medizinischen Bereichen, genutzt werden können. Vorzugsweise ist eine Aussendung des schmalbandigen Messsignals in dem Messgerät zulassungsfrei oder benötigt lediglich eine allgemeine Zulassung, so dass die Aussendung des schmalbandigen Messsignals keiner Beschränkung, wie beispielsweise eines Kontakts mit der Oberfläche des Untersuchungsobjekts, unterliegt. Das von dem UWB-Messgerät ausgesandte schmalbandige Messsignal kann zudem von einem einzigen Signal mit einer schmalbandigen Sendefrequenz gebildet sein oder von mehreren Signalen mit jeweils einer zu den weiteren Signalen unterschiedlich ausgebildeten schmalbandigen Sendefrequenz. Diese Ausgestaltung der Erfindung ermöglicht es, dass das schmalbandige Messsignal, insbesondere das ISM-Messsignal, vorteilhaft zeitlich oder örtlich vor einem Kontakt des UWB-Messgeräts mit der Oberfläche des Untersuchungsobjekts ausgesandt werden kann. Zudem kann bei Verwendung des Sendesignals mit mehreren unterschiedlichen Sendefrequenzen eine hohe Erkennungswahrscheinlichkeit und/oder eine hohe Messgenauigkeit des UWB-Messgeräts vorteilhaft erreicht werden. Es kann somit insbesondere ein Fehlbetrieb des UWB-Messgeräts mit dem ersten UWB-Messsignal vorteilhaft verhindert werden.

In einer alternativen Weiterbildung der Erfindung wird vorgeschlagen, dass die Signalerzeugungseinheit zumindest eine Signalquelle aufweist, die zum Erzeugen des ersten UWB-Messsignals und des zweiten Messsignals vorgesehen ist. Unter einer "Signalquelle" soll hierbei insbesondere eine Einheit und/oder ein Element verstanden werden, die und/oder das zu einem Generieren des ersten UWB-Messsignals und des zweiten Messsignals vorgesehen ist Es kann hierbei ein besonders kompaktes UWB-Messgerät unter Einsparung insbesondere weiterer Bauteile, Bauraum, Montageaufwand und Kosten hergestellt werden.

Alternativ hierzu wird vorgeschlagen, dass die Signalerzeugungseinheit eine erste Signalquelle zur Erzeugung des ersten UWB-Messsignals und zumindest eine zweite Signalquelle zur Erzeugung des zweiten Messsignals aufweist. Es kann eine vorteilhafte Signaltrennung zwischen dem ersten UWB-Messsignal und dem zweiten Messsignal erreicht werden und eine unerwünschte Überlagerung und/oder Störung zwischen den beiden Messsignalen insbesondere verhindert werden.

Vorteilhafterweise weist das UWB-Messgerät zumindest ein Signalfilterelement auf, das zu einer Signalselektion des ersten UWB-Messsignals und/oder des zweiten Messsignals vorgesehen ist. In diesem Zusammenhang soll unter einem "Signalfilterelement" insbesondere ein Element verstanden werden, das zumindest teilweise von einem Hochpasselement und/oder einem Tiefpasselement und/oder einem Bandpasselement gebildet ist. Es kann bei Verwendung einer gemeinsamen Signalquelle für das erste UWB-Messsignal und das zweite Messsignal, wie beispielsweise eine Signalquelle für ein Ultrabreitbandsignal, das erste UWB-Messsignal oder das zweite Messsignal an jeweilige Sendebedingungen angepasst werden. Zudem kann in konstruktiv einfacher Weise das Signal einer einzigen Signalquelle in zwei voneinander unterschiedliche Messsignale umgewandelt werden.

Ferner wird vorgeschlagen, dass das UWB-Messgerät ein Antennenelement aufweist, das zu einem Aussenden und/oder Empfangen des ersten UWB-Messsignals und des zweiten Messsignals vorgesehen ist, wodurch vorteilhaft weitere Bauteile, Bauraum, Montageaufwand und Kosten eingespart werden können. In diesem Zusammenhang soll unter einem "Aussenden" insbesondere ein Abstrahlen des ersten und des zweiten Messsignals verstanden werden.

Alternativ hierzu wird vorgeschlagen, dass das UWB-Messgerät ein erstes Antennenelement, das zum Aussenden und/oder Empfangen des ersten UWB-Messsignals vorgesehen ist, und ein zweites Antennenelement aufweist, das zum Aussenden und/oder Empfangen des zweiten Messsignals vorgesehen ist, wodurch eine unerwünschte Störung und/oder Überlagerung der beiden Messsignale vorteilhaft verhindert werden kann. Zudem kann hierbei auf weitere Filterelemente, die bei einem gemeinsamen Antennenelement erforderlich und diesem zur Trennung der beiden Messsignale nachgeschaltet sind, zumindest teilweise verzichtet werden. Das erste Antennenelement ist dabei vorzugsweise von einem Ultrabreitbandantennenelement und das zweite Antennenelement vorzugsweise von einem Antennenelement zum Aussenden und/oder Empfangen von schmalbandigen Messsignalen oder einem Ultrabreitbandantennenelement gebildet.

Besonders vorteilhaft weist das UWB-Messgerät zumindest ein Signalschaltelement auf, das zu einem Umschalten zwischen einem Betriebsmodus mit dem ersten UWB-Messsignal und einem Betriebsmodus mit dem zweiten Messsignal vorgesehen ist. Hierbei kann vorteilhaft ein Messbetrieb an eine aktuelle Positionierung des UWB-Messgeräts bezüglich des Untersuchungsobjekts angepasst werden. Zudem kann hierbei ein konstruktiv einfaches Umschalten erreicht werden. Vorzugsweise ist das Signalschaltelement weiterhin dazu vorgesehen, im Betriebsmodus mit dem ersten UWB-Messsignal gleichzeitig in den Betriebsmodus mit dem zweiten Messsignal zu schalten und umgekehrt, so dass beide Betriebsmodi zumindest teilweise gleichzeitig erfolgen können.

In einer alternativen Weiterbildung der Erfindung wird vorgeschlagen, dass das UWB-Messgerät eine Recheneinheit aufweist, die zu einem zumindest teilweise automatischen Umschalten zwischen dem Betriebsmodus mit dem ersten UWB-Messsignal und dem Betriebsmodus mit dem zweiten Messsignal mittels des Signalschaltelements vorgesehen ist. Unter einer "Recheneinheit" soll dabei insbesondere eine Einheit verstanden werden, die von einer Auswerteeinheit und/oder einer Signalverarbeitungseinheit gebildet sein kann, wobei die Recheneinheit sowohl von einem Prozessor allein als auch insbesondere von einem Prozessor und weiteren Elektronikbauteilen, wie beispielsweise einem Speichermittel, gebildet sein kann. Ferner kann in der Recheneinheit zumindest ein Betriebsprogramm gespeichert werden. Des Weiteren soll unter "automatisch" insbesondere ein automatisiertes und/oder ein selbsttätiges Umschalten verstanden werden, so dass manuelle Bedienfehler während eines Umschaltvorgangs vorteilhaft verhindert werden können. Durch die erfindungsgemäße Ausgestaltung kann eine an eine momentane und/oder aktuelle Messposition und/oder Messsituation des UWB-Messgeräts angepasste Umschaltung und/oder Auswahl der Betriebsmodi erreicht werden.

Weiterhin wird vorgeschlagen, dass das UWB-Messgerät eine Recheneinheit aufweist, die zu einer Modulation des zweiten Messsignals während der Erfassung des Abstands zu dem Untersuchungsobjekt und/oder des Kontakts mit dem Untersuchungsobjekt vorgesehen ist. In diesem Zusammenhang soll unter einer "Modulation des zweiten Messsignals" insbesondere eine Veränderung des zweiten Messsignals verstanden werden, wobei hierbei das zweite Messsignal hinsichtlich seiner Amplitude und/oder besonders vorteilhaft hinsichtlich seiner Frequenz verändert und/oder moduliert werden kann. Unter "während" soll insbesondere verstanden werden, dass die Erfassung des Abstands des UWB-Messgeräts zu dem Untersuchungsobjekt und die Modulation des zweiten Messsignals zeitgleich erfolgen können. Es können hierbei insbesondere Störungen innerhalb des Frequenzbereichs des zweiten Messsignals durch weitere signalaussendende Geräte reduziert und/oder verhindert werden. Zudem kann besonders vorteilhaft ein störungsfreies und exaktes Messen des Abstands des UWB-Messgeräts zu dem Untersuchungsobjekt erreicht werden.

Darüber hinaus wird vorgeschlagen, dass das UWB-Messgerät eine Recheneinheit aufweist, die zu einem Aktivieren des Betriebsmodus mit dem ersten UWB-Messsignal bei Vorhandensein eines Kontakts mit dem Untersuchungsobjekt vorgesehen ist. Unter einem "Aktivieren" soll hierbei insbesondere ein Starten und/oder ein Aufnehmen des Betriebsmodus mit dem ersten UWB-Messsignal verstanden werden. Insbesondere kann hierbei ein Sicherheitsrisiko für den Bediener des UWB-Messgeräts minimiert werden, indem eine Entscheidung, ob und wann ein Kontakt des UWB-Messgeräts mit dem Untersuchungsobjekt vorliegt, durch die Recheneinheit getroffen werden.

Zudem geht die Erfindung aus von einem UWB-Messverfahren für ein UWB-Messgerät, insbesondere für ein handgeführtes Ortungsgerät, wobei eine UWB-Messung mit einem ersten UWB-Messsignal und eine Erfassung eines Abstands des UWB-Messgeräts zu einem Untersuchungsobjekt und/oder eine Messung eines Kontakts des UWB-Messgeräts mit dem Untersuchungsobjekt mit einem zweiten Messsignal erfolgt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Ortungsgerät ausgebildetes, erfindungsgemäßes UWB-Messgerät in einer schematischen Darstellung,
- Fig. 2: das Ortungsgerät der Fig. 1 zusammen mit einem Untersuchungsobjekt in einer Draufsicht,
- Fig. 3: ein schematischer Aufbau einer Ortungseinheit des Ortungsgeräts mit einer gemeinsamen Signalquelle mit gestuften Frequenzdurchläufen der Messsignale,
- Fig. 4: ein zu Figur 3 alternativer Aufbau der Ortungseinheit,
- Fig. 5a, 5b: ein schematischer Aufbau des Ortungsgeräts mit einem Signalfilter-element,
- Fig. 6: ein schematischer Aufbau des Ortungsgeräts mit einer gemeinsamen Signalquelle und zwei Antennenelementen,
- Fig. 7a, 7b: ein schematischer Aufbau des Ortungsgeräts mit zwei, von jeweils einer Ultrabreitbandsignalquelle gebildeten Signalquelle und
- Fig. 8a,8b: ein schematischer Aufbau des Ortungsgeräts mit einer ISM-Signalquelle und einer Ultrabreitbandsignalquelle.

### Beschreibung der Ausführungsbeispiele

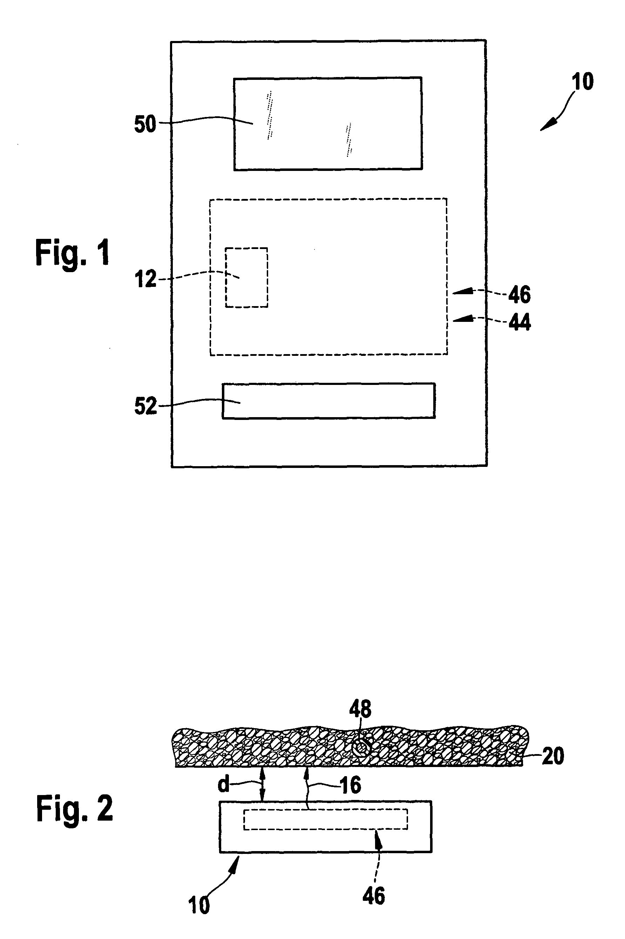

In Figur 1 ist ein als handgeführtes Ortungsgerät ausgebildetes, erfindungsgemäßes UWB-Messgerät 10 schematisch dargestellt. Das Ortungsgerät weist eine von einer UWB-Messeinheit 44 gebildete Ortungseinheit 46 auf, die eine Signalerzeugungseinheit 12 zur Erzeugung eines ersten UWB-Messsignals 14 aufweist, das zu einer von einer UWB-Messung gebildeten Ortungsmessung zum Erfassen eines Vorhandenseins eines in einem Untersuchungsobjekt 20 angeordneten Gegenstands 48 im Betrieb der Ortungseinheit 46 vorgesehen ist. Das handgeführte Ortungsgerät weist weiterhin eine Anzeigeneinheit 50 für eine optische Ausgabe eines Messergebnisses für einen Bediener des Ortungsgeräts auf und eine Eingabeeinheit 52 für eine Eingabe von möglichen Betriebsparametern und/oder zum An- oder Ausschalten des Ortungsgeräts durch den Bediener. In Figur 2 ist das Ortungsgerät zusammen mit dem Untersuchungsobjekt 20, das hier von einer Wand gebildet ist, in einer Draufsicht dargestellt.

Die Signalerzeugungseinheit 12 ist weiterhin zu einer Erzeugung eines zu dem ersten UWB-Messsignal 14 in zumindest einem Signalparameter unterschiedlichen, zweiten Messsignals 16 vorgesehen, das zu einer Erfassung eines Abstands d des Ortungsgeräts zu dem Untersuchungsobjekt 20, insbesondere zu einer der Wandoberfläche, und/oder zu einer Erfassung eines Kontakts mit dem Untersuchungsobjekt 20 vorgesehen ist (Figur 2).

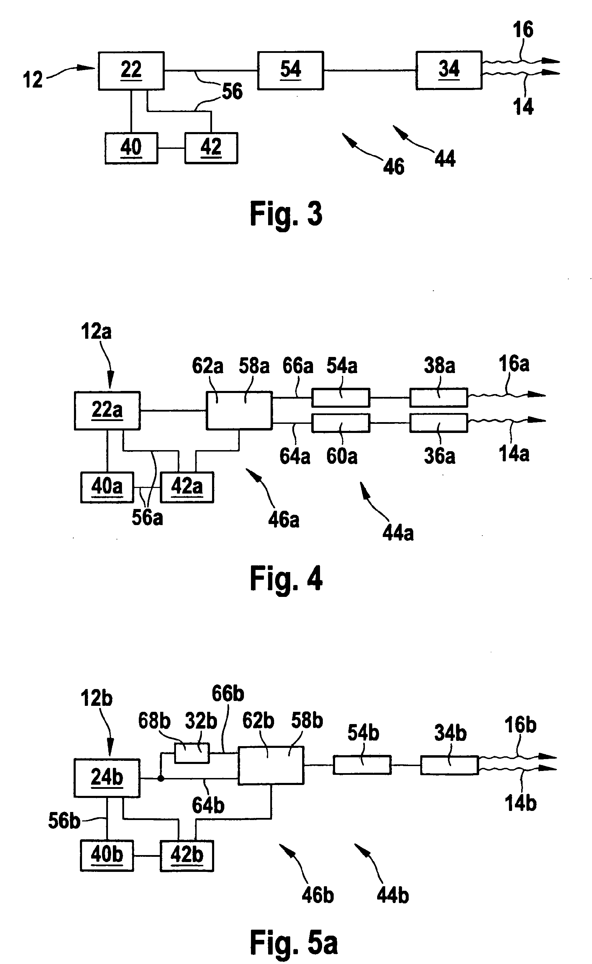

In Figur 3 ist ein erstes Ausführungsbeispiel der Ortungseinheit 46 näher dargestellt. Die Signalerzeugungseinheit 12 weist hierbei eine einzige Signalquelle 22 auf, die sowohl zum Erzeugen des ersten UWB-Messsignals 14 und des zweiten Messsignals 16 vorgesehen ist. Das zweite Messsignal 16 ist hierbei von einem schmalbandigen ISM-Messsignal gebildet, wobei das Ortungsgerät zulassungsfrei mittels des schmalbandigen Messsignals betrieben werden kann. Zudem weist die Ortungseinheit 46 ein einziges Antennenelement 34 auf, das zu einem Aussenden und/oder zu einem Empfangen des ersten UWB-Messsignals 14 und des schmalbandigen ISM-Messsignals vorgesehen ist. Das schmalbandige ISM-Messsignal kann hierbei von einem Signal mit einer schmalbandigen Frequenz oder von mehreren Signalen mit einer jeweils unterschiedlichen schmalbandigen Frequenz gebildet sein. Die Signalquelle 22 ist zum Aussenden von schmalbandigen Messsignalen vorgesehen, wobei das erste UWB-Messsignal 14 mittels der Signalquelle 22 ausgesandt wird, indem das schmalbandige Signal der Signalquelle eine Bandbreite des ersten UWB-Messsignals 14 durch schnelle Frequenzdurchläufe (Sweeps) von schmalbandigen Frequenzbereichen des Signals generiert.

Das schmalbandige ISM-Messsignal kann ferner eine Sendeleistung aufweisen, die unterschiedlich zu einer Sendeleistung des ersten UWB-Messsignals 14 ausgebildet ist. Es kann beispielsweise eine gegenüber dem ersten UWB-Messsignal 14 niedrigere Sendeleistung für das schmalbandige ISM-Messsignal verwendet werden, um das Ortungsgerät zumindest teilweise in einem Energiesparmodus zu betreiben. Des Weiteren kann beispielsweise zum Erreichen einer hohen Erkennungsrate des Untersuchungsobjekts 20, insbesondere der Wandoberfläche und/oder eines Abstands d zur Wandoberfläche, eine hohe Ausgangsleistung des schmalbandigen ISM-Messsignals verwendet werden.

Des Weiteren weist die Ortungseinheit 46 zumindest ein Signalschaltelement 40 auf, das zu einem Umschalten zwischen einem Betriebsmodus mit dem ersten UWB-Messsignal 14 und einem Betriebsmodus mit dem schmalbandigen ISM-Messsignal vorgesehen ist. Zudem weist die Ortungseinheit 46 eine Recheneinheit 42 auf, die zu einer Steuerung des Signalschaltelements 40 vorgesehen ist, so dass ein zumindest teilweise automatisches Umschalten zwischen den beiden Betriebsmodi und/oder zwischen beiden Sendepfaden mittels des Signalschaltelements 40 ermöglicht wird. Die Recheneinheit 42 ist des Weiteren zur Steuerung der Signalerzeugungseinheit 12 vorgesehen, so dass das Aussenden und/oder Empfangen der beiden Messsignale 14, 16, insbesondere eine zeitliche Abfolge des Aussendens und/oder Empfangens der beiden Messsignale 14,16, durch die Recheneinheit 42 gesteuert wird. Mittels der Recheneinheit 42 kann hierbei ein alternierendes Aussenden und/oder Empfangen des ersten UWB-Messsignals 14 und des schmalbandigen ISM-Messsignals oder ein gleichzeitiges Aussenden und/oder Empfangen des ersten UWB-Messsignals 14 und des schmalbandigen ISM-Messsignals erzielt werden. Zudem ist die Recheneinheit 42 hierbei zu einer Modulation einer Sendefrequenz des zweiten Messsignals 16 vorgesehen.

In einer alternativen Ausgestaltung der Erfindung können das Signalschaltelement 40 und die Recheneinheit 42 einstückig ausgebildet sein.

Die einzelnen Bauteile und Einheiten der Ortungseinheit 46 sind mittels eines Datenübertragungselements 56 miteinander verbunden. Die Signalerzeugungseinheit 12 zusammen mit den weiteren Signalverarbeitungselementen 54, dem Antennenelement 34 und der Recheneinheit 42 sind in einem ASIC (anwendungsspezifische integrierte Schaltung) integriert. Grundsätzlich ist es jedoch auch denkbar, dass die einzelnen Elemente diskret aufgebaut und/oder angeordnet sind.

Zu Beginn eines Betriebs des Ortungsgeräts wird zunächst ein Kontakt des Ortungsgeräts zu dem Untersuchungsobjekt 20 und/oder ein Abstand d zwischen dem Untersuchungsobjekt 20 und dem Ortungsgerät erfasst. Hierbei wird, gesteuert von der Recheneinheit 42, von der Signalerzeugungseinheit 12 das schmalbandige ISM-Messsignal ausgesandt, wobei eine Messung des Abstands d vorteilhaft über eine Messung einer Phasendifferenz Δϕ zwischen dem ausgesandten schmalbandigen ISM-Messsignal und einem von der Oberfläche des Untersuchungsobjekts 20 reflektierten schmalbandigen Signal erfolgt. Der Abstand d berechnet sich hierbei zu: d=Δϕ·c₀/(4π·f), wobei f der Messfrequenz entspricht und c₀ der Lichtgeschwindigkeit. Ein Eindeutigkeitsbereich d_{E} der Abstandsmessung ist hierbei Frequenzabhängig: d_{E}=c₀/(2f), wobei nur Abstände d zwischen dem Eindeutigkeitsbereich d_{E} und einem ganzzahligen Vielfachen des Eindeutigkeitsbereichs n·d_{E} unterschieden werden können, wobei n eine ganze, positive Zahl darstellt. Ein Abstand d von dem Eindeutigkeitsbereich d_{E} oder einem ganzzahligen Vielfachen hiervon kann aufgrund des Messprinzips nicht mehr unterschieden werden. Zur Erhöhung einer Messgenauigkeit des Abstands d zwischen dem Ortungsgerät und dem Untersuchungsobjekt 20 werden von der Signalerzeugungseinheit 12 zumindest zwei schmalbandige ISM-Messsignale mit jeweils unterschiedlichen Messfrequenzen ausgesandt, wobei eine Modulation der Messfrequenzen und/oder der unterschiedlichen schmalbandigen ISM-Messsignale mittels der Recheneinheit 42 erfolgt. Die Modulation der Messfrequenzen des schmalbandigen ISM-Messsignals erfolgt dabei während der Abstandsmessung und/oder der Kontakterfassung. Alternativ hierzu könnte der Abstand d des Ortungsgeräts zu dem Untersuchungsobjekt 20 mittels einer Erfassung einer Amplitude des schmalbandigen ISM-Messsignals und einer Amplitude des reflektierten schmalbandigen Signals erfolgen.

Ein Betriebsmodus mit dem schmalbandigen ISM-Messsignal kann im Gegensatz zu einem Betriebsmodus mit dem ersten UWB-Messsignal 14 zulassungsfrei betrieben werden, so dass insbesondere ein Messbetrieb in dem Betriebsmodus mit dem schmalbandigen ISM-Messsignal in einem Abstand des Ortungsgeräts zu dem Untersuchungsobjekt 20 erfolgen kann, währenddessen ein Betriebsmodus mit dem ersten UWB-Messsignal 14 erst bei Kontakt des Ortungsgeräts mit dem Untersuchungsobjekt 20 aufgrund von Zulassungsbeschränkungen erfolgen darf.

Sobald im Betrieb des Ortungsgeräts ein Kontakt des Ortungsgeräts mit dem Untersuchungsobjekt 20 erfasst wird, wird automatisch von der Recheneinheit 42 der Betriebsmodus mit dem ersten UWB-Messsignal 14 zu einer Ortungsmessung aktiviert. In einer alternativen Ausgestaltung der Erfindung ist es zudem denkbar, dass eine Information über die Anzeigeneinheit 50 für den Bediener ausgegeben wird, die einen Kontakt des Ortungsgeräts mit dem Untersuchungsobjekt 20 anzeigt und der Bediener manuell in den Betriebsmodus mit dem ersten UWB-Messsignal 14 umschaltet. Der Betriebsmodus des schmalbandigen ISM-Messsignals bleibt weiterhin aktiviert, so dass nach Aussenden von einem oder mehreren UWB-Messsignalen 14 eine oder mehrere schmalbandige ISM-Messsignale ausgesendet werden, um eine Kontaktierung des Ortungsgeräts mit dem Untersuchungsobjekt 20 zu kontrollieren. Mittels der Recheneinheit 42 und dem gleichzeitig betriebenen Betriebsmodi mit dem ersten UWB-Messsignal 14 und dem schmalbandigen ISM-Messsignal kann somit ein Abheben des Ortungsgeräts von dem Untersuchungsobjekt 20 selbsttätig erfasst werden und daraufhin der Betriebsmodus mit dem ersten UWB-Messsignal 14 aus Sicherheitsgründen selbsttätig unterbrochen oder abgeschaltet werden.

Das erste UWB-Messsignal 14 weist eine erste Polarisationsrichtung und das schmalbandige ISM-Messsignal eine zweite Polarisationsrichtung auf, wobei die beiden Polarisationsrichtungen im Wesentlichen orthogonal zueinander ausgerichtet sind, so dass eine gegenseitige Störung der beiden Messsignale 14, 16 bei einem gleichzeitigen Aussenden und/oder Empfangen der Messsignale 14, 16 minimiert wird. Grundsätzlich ist es jederzeit denkbar, dass die beiden Polarisationsrichtungen im Wesentlichen parallel zueinander ausgerichtet sind.

Zudem weist die Ortungseinheit 46 ein oder mehrere Signalverarbeitungselemente 54 auf, das oder die entlang eines Signalwegs zwischen der Signalerzeugungseinheit 12 und dem Antennenelement 34 angeordnet sind. Zumindest ein Signalverarbeitungselement 54 kann von einem Transceiver gebildet sein, der zu einer Kompensierung von Signalschwankungen des ersten UWB-Messsignals 14 und/oder des schmalbandigen ISM-Messsignals vorgesehen ist, wobei hierbei die Messsignale 14, 16 zu einem geräteinternen Referenznetzwerk geleitet werden. Dabei kann für jedes der beiden Messsignale 14, 16 ein separater Transceiver zur Verfügung stehen oder ein Transceiver, zu den beide Messsignale 14, 16 geleitet werden und mittels eines Schaltelements ein Schalten zwischen den beiden Messsignalen 14, 16 erfolgt.

In den Figuren 4 bis 8b sind zu der Figur 3 alternative Ausgestaltungen eines UWB-Messgeräts 10 dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist den Bezugszeichen des nachfolgenden Ausführungsbeispiels der Buchstabe a bis e hinzugefügt. Die nachfolgende Beschreibung beschränkt sich im Wesentlichen auf die Unterschiede zu dem Ausführungsbeispiel in den Figuren 1 bis 3, wobei bezüglich gleich bleibender Bauteile, Merkmale und Funktionen auf die Beschreibung des Ausführungsbeispiels in den Figuren 1 bis 3 verwiesen werden kann.

Eine Ortungseinheit 46a in Figur 4 weist gegenüber der Ortungseinheit 46 in Figur 3 zwei Antennenelemente 36a, 38a auf, wobei ein erstes Antennenelement 36a zum Aussenden und/oder Empfangen eines ersten UWB-Messsignals 14a und das zweite Antennenelement 38a zum Aussenden und/oder Empfangen eines zweiten Messsignals 16a, das von einem schmalbandigen ISM-Messsignal gebildet ist, vorgesehen sind. Zudem weist die Ortungseinheit 46a mehrere Signalverarbeitungselemente 54a, 58a, 60a auf, die entlang eines Signalverlaufs zwischen einer Signalerzeugungseinheit 12a und den beiden Antennenelementen 36a, 38a angeordnet sind. Ein erstes Signalverarbeitungselement 58a ist von einem Signalschaltelement 62a gebildet, das zu einem Umschalten zwischen einem Betriebsmodus mit dem ersten UWB-Messsignal 14a und einem Betriebsmodus mit dem schmalbandigen ISM-Messsignal vorgesehen ist. Das Schaltelement 62a kann beispielsweise von einer schaltbaren Weiche gebildet sein, die einen Signalpfad 66a des schmalbandigen ISM-Messsignals zu- oder abschaltet. Das Signalschaltelement 62a wird von einer Recheneinheit 42a der Ortungseinheit 46a gesteuert, so dass abhängig vom von der Signalerzeugungseinheit 12a ausgesandten Messsignal 14a, 16a ein Signalpfad 64a, 66a für das Messsignal 14a, 16a ausgewählt wird.

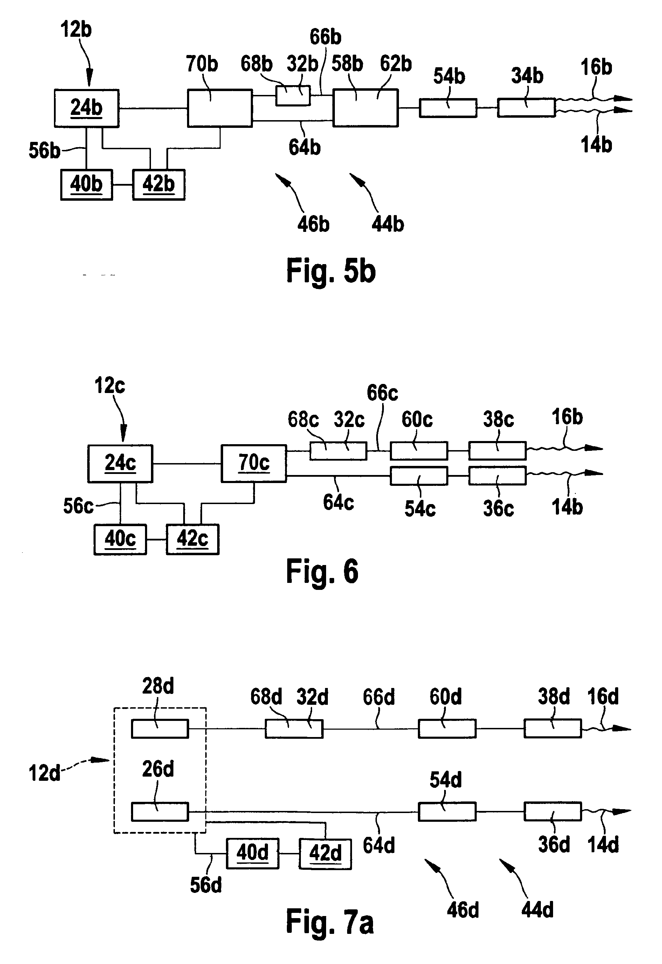

In den Figuren 5a und 5b ist ein weiteres Ausführungsbeispiel einer Ortungseinheit 46b des UWB-Messgeräts 10 dargestellt. Die Ortungseinheit 46b weist eine Signalerzeugungseinheit 12b mit einer Signalquelle 24b auf, die zu einem Aussenden eines ersten UWB-Messsignals 14b vorgesehen ist. Die Signalquelle 24b ist hierbei von einer UWB-Signalquelle gebildet. Zwischen der Signalerzeugungseinheit 12b und einem Antennenelement 34b sind mehrere Signalverarbeitungselemente 54b, 58b, 68b der Ortungseinheit 46b angeordnet. Ein erstes Signalverarbeitungselement 68b ist von einem Signalfilterelement 32b gebildet, das der Signalerzeugungseinheit 12b nachgeschaltet angeordnet ist. Das Signalfilterelement 32b ist zu einer Signalselektion zwischen dem ersten UWB-Messsignal 14b und einem zweiten Messsignal 16b vorgesehen, wobei das Signalfilterelement 32b für das zweite Messsignal 16b auf Durchlass geschaltet ist und für das erste UWB-Messsignal 14b eine Barriere bildet. Das zweite Messsignal 16b ist hierbei von einem schmalbandigen ISM-Messsignal und/oder einem zulassungsfreien breitbandigen UWB-Messsignal gebildet, wobei hierbei das zweite UWB-Messsignal in einem Frequenzbereich von 6 GHz bis 8,5 GHz angeordnet ist. Das von der Signalerzeugungseinheit 12b generierte Signal wird vor dem Signalfilterelement 32b geteilt. Das Signalfilterelement 32b kann zumindest teilweise von einem Hochpasselement, einem Tiefpasselement und/oder einem Bandpasselement gebildet sein, wobei das Signalfilterelement 32b im Signalpfad 66b des schmalbandigen ISM-Messsignals angeordent ist. Grundsätzlich könnte in einer alternativen Ausgestaltung das Signalfilterelement 32b zur Filterung des ersten UWB-Messsignals 14b vorgesehen sein.

Das zweite Signalverarbeitungselement 58b, das entlang eines Signalwegs zwischen der Signalerzeugungseinheit 12b und dem Antennenelement 34b angeordnet ist, ist von einem Signalschaltelement 62b gebildet, das zu einem Umschalten zwischen einem Betriebsmodus mit dem ersten UWB-Messsignal 14b und einem Betriebsmodus mit dem zweiten Messsignal 16b vorgesehen ist. Das Signalschaltelement 62b kann beispielsweise von einer schaltbaren Weiche gebildet sein, die einen Signalpfad 66b des zweiten Messsignals 16b zu- oder abschaltet. Die Ortungseinheit 46b weist zudem eine Recheneinheit 42b auf, die zu einer Steuerung des Signalschaltelements 62b vorgesehen ist, so dass ein zumindest teilweise automatisches Umschalten zwischen den beiden Betriebsmodi und/oder zwischen beiden Signalpfaden 64b, 66b mittels des Signalschaltelements 62b ermöglicht wird. Die Recheneinheit 42b ist des Weiteren zur Steuerung der Signalerzeugungseinheit 12b vorgesehen, so dass das Aussenden und/oder Empfangen der beiden Messsignale 14b, 16b, insbesondere eine zeitliche Abfolge des Aussendens und/oder Empfangens der beiden Messsignale14b, 16b, gesteuert wird. Mittels der Recheneinheit 42b kann hierbei ein alternierendes Aussenden und/oder Empfangen der beiden Messsignale 14b, 16b oder ein gleichzeitiges Aussenden und/oder Empfangen der beiden Messsignale 14b, 16b erzielt werden.

In Figur 5b ist zur Signalteilung ein Signalteiler 70b dem Signalfilterelement 32b vorgeschaltet angeordnet.

In Figur 6 ist ein weiteres Ausführungsbeispiel der Ortungseinheit 46 dargestellt. Die Ortungseinheit 46c weist zwei Antennenelemente 36c, 38c auf, wobei das erste Antennenelement 36c zum Aussenden und/oder Empfangen des ersten UWB-Messsignals 14c und das zweite Antennenelement 38c zum Aussenden und/oder Empfangen des zweiten Messsignals 16c vorgesehen ist. Die Ortungseinheit 46c weist ab einem Signalteiler 70c zwei Signalpfade 64c, 66c mit jeweils einem Antennenelement 36c, 38c auf. Eine Funktionsweise und ein weiterer Aufbau der Ortungseinheit 46c entsprechen einer Funktionsweise und einem Aufbau der Ortungseinheit 46b aus der Figur 5b.

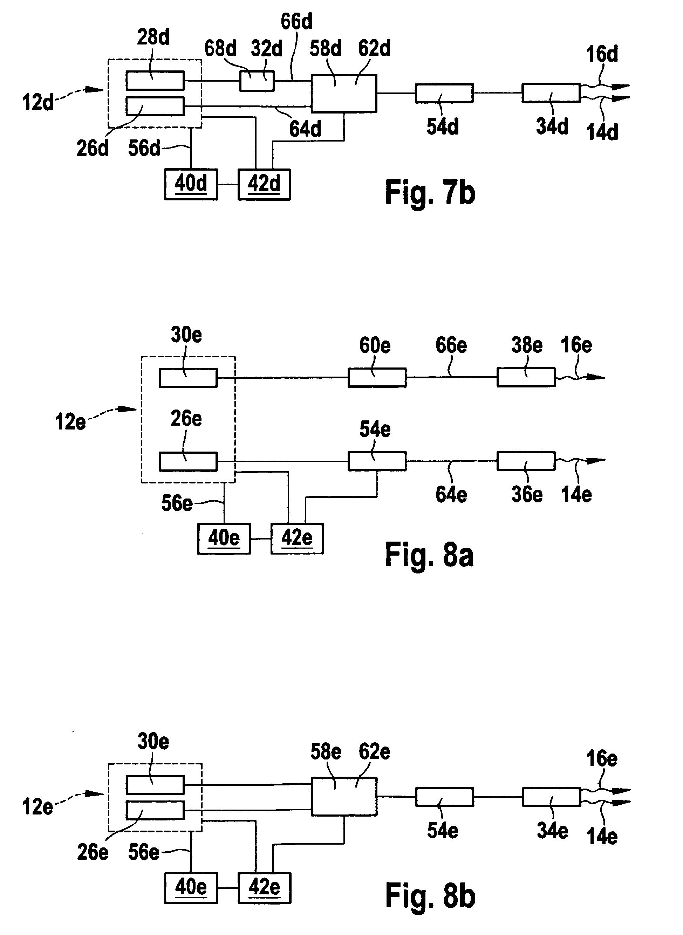

In Figuren 7a und 7b ist jeweils ein weiteres Ausführungsbeispiel der Ortungseinheit 46d dargestellt mit einer Signalerzeugungseinheit 12d, die zwei Signalquellen 26d, 28d aufweist. Die beiden Signalquellen 26d, 28d sind jeweils von einer UWB-Signalquelle gebildet.

In Figur 7a weist eine Ortungseinheit 46d zwei Antennenelemente 36d, 38d auf, so dass für jedes der beiden Messsignale 14d, 16d ein eigener Signalpfad 64d, 66d von der Signalerzeugungseinheit 12d bis zum Antennenelement 36d, 38d zur Verfügung steht. Der Signalpfad 66d des zweiten Messsignals 16d weist zudem ein Signalfilterelement 32d auf. Das zweite Messsignal 16d ist analog zu dem zweiten Messsignal in den Figuren 5a bis 6 ausgebildet. Eine Wirkungsweise der Ortungseinheit 46d entspricht einer Wirkungsweise der Ortungseinheiten in den Figuren 5a bis 6.

Das Ausführungsbeispiel in Figur 7b weist ein gemeinsames Antennenelement 34d auf, über das sowohl das erste UWB-Messsignal 14d als auch das zweite Messsignal 16d ausgesandt und/oder empfangen wird. Hierzu weist die Ortungsvorrichtung ein Signalschaltelement 62d auf, das die beiden Signalpfade 64d, 66d vereinigt und zudem je nach Betriebsmodus das zur Messung vorgesehene Messsignal 14d, 16d durchlässt.

Die Ausführungsbeispiele in den Figuren 8a und 8b weisen ebenfalls jeweils eine Signalerzeugungseinheit 12e auf, die zwei Signalquellen 26e, 30e umfasst. Die erste Signalquelle 26e ist von einer UWB-Signalquelle gebildet und zum Aussenden eines ersten UWB-Messsignals 14e vorgesehen. Die zweite Signalquelle 30e ist von einer ISM-Signalquelle gebildet und zum Aussenden eines schmalbandigen ISM-Messsignals vorgesehen. Ein weiterer Aufbau und eine Funktionsweise der Ortungseinheit 46e entspricht hierbei einem Aufbau und einer Funktionsweise der Ortungseinheit 46d in den Figuren 7a und 7b.

## Patentansprüche

1. UWB-Messgerät, insbesondere Ortungsgerät, mit zumindest einer Signalerzeugungseinheit (12; 12a-12e) zur Erzeugung zumindest eines ersten UWB-Messsignals (14; 14a-14e), das zu einem Erfassen eines Vorhandenseins eines in dem Untersuchungsobjekt (20) angeordneten Gegenstands vorgesehen ist, und/oder zu einer Feuchtemessung, insbesondere eines Feuchtegehalts des Untersuchungsobjekts (20), **dadurch gekennzeichnet, dass** die Signalerzeugungseinheit (12; 12a-12e) zur Erzeugung eines zu dem ersten UWB-Messsignal (14; 14a-14e) in zumindest einem Signalparameter unterschiedlichen, zweiten Messsignals (16; 16a-16e) vorgesehen ist, das zu einer Erfassung eines Abstands (d) zu dem Untersuchungsobjekt (20) und/oder eines Kontakts mit dem Untersuchungsobjekt (20) vorgesehen ist.

2. UWB-Messgerät nach Anspruch 1, **dadurch gekennzeichnet, dass das** zweite Messsignal (16; 16a-d) zumindest teilweise von einem UWB-Messsignal gebildet ist.

3. UWB-Messgerät nach einem der vorhergehenden Ansprüche, **dadurch gekennzeichnet, dass** das zweite Messsignal (16; 16a-16e) zumindest teilweise von einem schmalbandigen Messsignal gebildet ist.

4. UWB-Messgerät nach einem der vorhergehenden Ansprüche, **dadurch gekennzeichnet, dass** die Signalerzeugungseinheit (12; 12a-12c) zumindest eine Signalquelle (22; 22a; 24b; 24c) aufweist, die zum Erzeugen des ersten UWB-Messsignals (14; 14a-14c) und des zweiten Messsignals (16; 16a-16c) vorgesehen ist.

5. UWB-Messgerät nach einem der Ansprüche 1 bis 3, **dadurch gekennzeichnet, dass** die Signalerzeugungseinheit (12d; 12e) eine erste Signalquelle (26d; 26e) zur Erzeugung des ersten UWB-Messsignals (14d; 14e) und zumindest eine zweite Signalquelle (28d; 30e) zur Erzeugung des zweiten Messsignals (16d; 16e) aufweist.

6. UWB-Messgerät nach einem der vorhergehenden Ansprüche, **gekennzeichnet durch** zumindest ein Signalfilterelement (32b-32d), das zu einer Signalselektion des ersten UWB-Messsignals (14b-14d) und/oder des zweiten Messsignals (16b-16d) vorgesehen ist.

7. UWB-Messgerät nach einem der vorhergehenden Ansprüche, **gekennzeichnet durch** ein Antennenelement (34; 34b; 34d; 34e), das zu einem Aussenden und/oder Empfangen des ersten UWB-Messsignals (14; 14b; 14d; 14e) und des zweiten Messsignals (16; 16b; 16d; 16e) vorgesehen ist.

8. UWB-Messgerät nach einem der Ansprüche 1 bis 6, **gekennzeichnet durch** ein erstes Antennenelement (36a; 36c-36e), das zum Aussenden und/oder Empfangen des ersten UWB-Messsignals (14a; 14c-14e) vorgesehen ist, und ein zweites Antennenelement (38a; 38c-38e), das zum Aussenden und/oder Empfangen des zweiten Messsignals (16a; 16c-16e) vorgesehen ist.

9. UWB-Messgerät nach einem der vorhergehenden Ansprüche, **gekennzeichnet durch** zumindest ein Signalschaltelement (40; 40a-40e; 62a; 62b; 62d; 62e), das zu einem Umschalten zwischen einem Betriebsmodus mit dem ersten UWB-Messsignal (14; 14a-14e) und einem Betriebsmodus mit dem zweiten Messsignal (16; 16a-16e) vorgesehen ist.

10. UWB-Messgerät nach Anspruch 9, **gekennzeichnet durch** eine Recheneinheit (42; 42a-42e), die zu einem zumindest teilweise automatischen Umschalten zwischen dem Betriebsmodus mit dem ersten UWB-Messsignal (14; 14a-14e) und dem Betriebsmodus mit dem zweiten Messsignal (16; 16a-16e) mittels des Signalschaltelements (40; 40a-40e; 62a; 62b; 62d; 62e) vorgesehen ist.

11. UWB-Messgerät nach einem der vorhergehenden Ansprüche, **gekennzeichnet durch** eine Recheneinheit (42; 42a-42e), die zu einer Modulation des zweiten Messsignals (16; 16a-16e) während der Erfassung des Abstands (d) zu dem Untersuchungsobjekt (20) und/oder des Kontakts mit dem Untersuchungsobjekt (20) vorgesehen ist.

12. UWB-Messgerät nach einem der vorhergehenden Ansprüche, **gekennzeichnet durch** eine Recheneinheit (42; 42a-42e), die zu einem Aktivieren des Betriebsmodus mit dem ersten UWB-Messsignal (14; 14a-14e) bei Vorhandensein eines Kontakts mit dem Untersuchungsobjekts (20) vorgesehen ist.

13. UWB-Messverfahren für ein UWB-Messgerät (10), insbesondere ein handgeführtes Ortungsgerät, nach einem der vorhergehenden Ansprüche, **dadurch gekennzeichnet, dass** eine UWB-Messung mit einem ersten UWB-Messsignal (14; 14a-14e) zu einem Erfassen eines Vorhandenseins eines in dem Untersuchungsobjekt (20) angeordneten Gegenstands und eine Erfassung eines Abstands des UWB-Messgeräts (10) dem Untersuchungsobjekt (20) und/oder eine Messung eines Kontakts des UWB-Messgeräts (10) mit dem Untersuchungsobjekt (20) mit einem zweiten Messsignal (16; 16a-16e) erfolgt.

## Claims

1. UWB measuring device, particularly a positioning device, comprising at least one signal generating unit (12; 12a-12e) for generating at least one first UWB measuring signal (14; 14a-14e) which is intended for detecting the presence of an object arranged in the object to be examined (20) and/or for a moisture measurement, in particular a moisture content of the object to be examined (20), **characterized in that** the signal generating unit (12; 12a-12e) is intended for generating a second measuring signal (16; 16a-16e), different from the first UWB measuring signal (14; 14a-14e) in at least one signal parameter, which is intended for detecting a distance (d) from the object to be examined (20) and/or a contact with the object to be examined (20).

2. UWB measuring device according to Claim 1, **characterized in that** the second measuring signal (16; 16a-d) is formed at least partially by a UWB measuring signal.

3. UWB measuring device according to one of the preceding claims, **characterized in that** the second measuring signal (16; 16a-16e) is formed at least partially by a narrow-band measuring signal.

4. UWB measuring device according to one of the preceding claims, **characterized in that** the signal generating unit (12; 12a-12c) exhibits at least one signal source (22; 22a; 24b; 24c) which is intended for generating the first UWB measuring signal (14; 14a-14c) and the second measuring signal (16; 16a-16c).

5. UWB measuring device according to one of Claims 1 to 3, **characterized in that** the signal generating unit (12d; 12e) exhibits a first signal source (26d; 26e) for generating the first UWB measuring signal (14d; 14e) and at least one second signal source (28d; 30e) for generating the second measuring signal (16d; 16e).

6. UWB measuring device according to one of the preceding claims, **characterized by** at least one signal filter element (32b-32d) which is intended for a signal selection of the first UWB measuring signal (14b-14d) and/or the second measuring signal (16b-16d).

7. UWB measuring device according to one of the preceding claims, **characterized by** an antenna element (34; 34b; 34d; 34e) which is intended for emitting and/or receiving the first UWB measuring signal (14; 14b; 14d; 14e) and the second measuring signal (16; 16b; 16d; 16e).

8. UWB measuring device according to one of Claims 1 to 6, **characterized by** a first antenna element (36a; 36c-36e) which is intended for emitting and/or receiving the first UWB measuring signal (14a; 14c-14e), and a second antenna element (38a; 38c-38e) which is intended for emitting and/or receiving the second measuring signal (16a; 16c-16e).

9. UWB measuring device according to one of the preceding claims, **characterized by** at least one signal switching element (40; 40a-40e; 62a; 62b; 62d; 62e) which is intended for switching between an operating mode using the first UWB measuring signal (14; 14a-14e) and an operating mode using the second measuring signal (16; 16a-16e).

10. UWB measuring device according to Claim 9, **characterized by** a computing unit (42; 42a-42e) which is intended for an at least partially automatic switching between the operating mode using the first UWB measuring signal (14; 14a-14e) and the operating mode using the second measuring signal (16; 16a-16e) by means of the signal switching element (40; 40a-40e; 62a; 62b; 62d; 62e).

11. UWB measuring device according to one of the preceding claims, **characterized by** a computing unit (42; 42a-42e) which is intended for modulating the second measuring signal (16; 16a-16e) during the detection of the distance (d) from the object to be examined (20) and/or of the contact with the object to be examined (20).

12. UWB measuring device according to one of the preceding claims, **characterized by** a computing unit (42; 42a-42e) which is intended for activating the operating mode using the first UWB measuring signal (14; 14a-14e) in the case of the presence of a contact with the object to be examined (20).

13. UWB measuring process for a UWB measuring device (10), particularly a hand-held positioning device, according to one of the preceding claims, **characterized in that** a UWB measurement is effected using a first UWB measuring signal (14; 14a-14e) for detecting the presence of an object arranged in the object to be examined (20) and a detection of a distance of the UWB measuring device (10) from the object to be examined (20) and/or a measurement of a contact of the UWB measuring device (10) with the object to be examined (20) is effected using a second measuring signal (16; 16a-16e).

## Revendications

1. Appareil de mesure UWB, notamment appareil de localisation, comprenant au moins une unité génératrice de signal (12 ; 12a-12e) destinée à générer au moins un premier signal de mesure UWB (14 ; 14a-14e), lequel est prévu pour une détection d'une présence d'un objet disposé dans l'objet examiné (20), et/ou pour une mesure d'humidité, notamment une teneur en humidité de l'objet examiné (20), **caractérisé en ce que** l'unité génératrice de signal (12 ; 12a-12e) est prévue pour générer un deuxième signal de mesure (16 ; 16a-16e) qui diffère du premier signal de mesure (14 ; 14a-14e) par au moins un paramètre de signal, lequel est prévu pour une détection d'un écart (d) par rapport à l'objet examiné (20) et/ou d'un contact avec l'objet examiné (20).

2. Appareil de mesure UWB selon la revendication 1, **caractérisé en ce que** le deuxième signal de mesure (16 ; 16a-16d) est au moins partiellement formé par un signal de mesure UWB.

3. Appareil de mesure UWB selon l'une des revendications précédentes, **caractérisé en ce que** le deuxième signal de mesure (16 ; 16a-16e) est au moins partiellement formé par un signal de mesure à bande étroite.

4. Appareil de mesure UWB selon l'une des revendications précédentes, **caractérisé en ce que** l'unité génératrice de signal (12 ; 12a-12e) présente au moins une source de signal (22 ; 22a ; 24b ; 24c) qui est prévue pour générer le premier signal de mesure UWB (14 ; 14a-14e) et le deuxième signal de mesure (16 ; 16a-16c).

5. Appareil de mesure UWB selon l'une des revendications 1 à 3, **caractérisé en ce que** l'unité génératrice de signal (12d ; 12e) présente une première source de signal (26d ; 26e) destinée à générer le premier signal de mesure UWB (14d ; 14e) et au moins une deuxième source de signal (28d ; 30e) destinée à générer le deuxième signal de mesure (16d ; 16e).

6. Appareil de mesure UWB selon l'une des revendications précédentes, **caractérisé par** au moins un élément de filtrage de signal (32b-32d) qui est prévu pour une sélection de signal entre le premier signal de mesure UWB (14b-14d) et le deuxième signal de mesure (16b-16d).

7. Appareil de mesure UWB selon l'une des revendications précédentes, **caractérisé par** un élément d'antenne (34 ; 34b ; 34d ; 34e) qui est prévu pour une émission et/ou réception du premier signal de mesure UWB (14 ; 14b ; 14d ; 14e) et du deuxième signal de mesure (16 ; 16b ; 16d ; 16e).

8. Appareil de mesure UWB selon l'une des revendications 1 à 6, **caractérisé par** un premier élément d'antenne (36a ; 36c-36e), lequel est prévu pour l'émission et/ou la réception du premier signal de mesure UWB (14a ; 14c-14e), et un deuxième élément d'antenne (38a ; 38c-36e), lequel est prévu pour l'émission et/ou la réception du deuxième signal de mesure (16a ; 16c-14e).

9. Appareil de mesure UWB selon l'une des revendications précédentes, **caractérisé par** au moins un élément de commutation de signal (40 ; 40a-40e ; 62a ; 62b ; 62d ; 62e), lequel est prévu pour une permutation entre un mode de fonctionnement avec le premier signal de mesure UWB (14 ; 14a-14e) et un mode de fonctionnement avec le deuxième signal de mesure (16 ; 16a-16e).

10. Appareil de mesure UWB selon la revendication 9, **caractérisé par** une unité de calcul (42 ; 42a-42e) qui est prévue pour une permutation au moins partiellement automatique entre le mode de fonctionnement avec le premier signal de mesure UWB (14 ; 14a-14e) et le mode de fonctionnement avec le deuxième signal de mesure (16 ; 16a-16e) à l'aide de l'élément de commutation de signal (40 ; 40a-40e ; 62a ; 62b ; 62d ; 62e).

11. Appareil de mesure UWB selon l'une des revendications précédentes, **caractérisé par** une unité de calcul (42 ; 42a-42e) qui est prévue pour une modulation du deuxième signal de mesure (16 ; 16a-16e) pendant la détection de l'écart (d) par rapport à l'objet examiné (20) et/ou du contact avec l'objet examiné (20).

12. Appareil de mesure UWB selon l'une des revendications précédentes, **caractérisé par** une unité de calcul (42 ; 42a-42e) qui est prévue pour une activation du mode de fonctionnement avec le premier signal de mesure UWB (14 ; 14a-14e) en présence d'un contact avec l'objet examiné (20).

13. Procédé de mesure UWB pour un appareil de mesure UWB (10), notamment un appareil de localisation portatif, selon l'une des revendications précédentes, **caractérisé en ce qu'**une mesure UWB est effectuée avec un premier signal de mesure UWB (14 ; 14a-14e) pour une détection d'une présence d'un objet disposé dans l'objet examiné (20), et une détection d'un écart (d) de l'appareil de mesure UWB (10) par rapport à l'objet examiné (20) et/ou une mesure d'un contact de l'appareil de mesure UWB (10) avec l'objet examiné (20) est effectuée avec un deuxième signal de mesure (16 ; 16a-16e).
